# EUROPÄISCHE PATENTANMELDUNG

(11) **EP 1 081 970 A1**
(43) Veröffentlichungstag der Anmeldung: **07.03.2001**
(21) Anmeldenummer: 00117385.5
(22) Anmeldetag: 23.08.2000
(51) Int. Cl.: H04Q 7/24

(54) **Verfahren zur Steuerung von Mehrwertdiensten in IP-basierten Kommunikationsnetzen**

(30) Priorität: 31.08.1999 DE 19994133
(71) Anmelder: SIEMENS AKTIENGESELLSCHAFT, 80333 München (DE)
(72) Erfinder: Föll, Uwe, 14612 Falkensee (DE)

(57) **Zusammenfassung**

Beim erfindungsgemäßen Verfahren zur Steuerung von Mehrwertdiensten für Teilnehmerstationen eines ersten Kommunikationsnetzes ist im ersten Kommunikationsnetz ein teilnehmerspezifisches Profil für die Mehrwertdienste gespeichert. Ein zweites Kommunikationsnetz führt eine Vermittlung auf der Basis des Internet-Protokolls durch. Eine Teilnehmerstation, die sich im Versorungsbereich des zweiten Kommunikationsnetzes befindet, meldet sich bei einer Kontrollinstanz des zweiten Kommunikationsnetzes an und fordert einen Mehrwertdienst an. Von der Kontrollinstanz des zweiten Kommunikationsnetzes werden zumindest Teile von Signalisierungsmeldungen der Teilnehmerstation zum ersten Kommunikationsnetz weitergeleitet, wo eine Steuerung des Mehrwertdienstes im zweiten Kommunikationsnetz durch einen Signalisierungsmeldungsaustausch auf der Basis des teilnehmerspezifischen Profils stattfindet. Durch diese Steuerung wird im zweiten Kommunikationsnetz eine Vermittlung von Nutzinformationen im Rahmen des Mehrwertdienstes möglich.

## Beschreibung

Die Erfindung betrifft ein Verfahren zur Steuerung von Mehrwertdiensten in IP-basierten Kommunikationsnetzen.

Die Verwendung sogenannter Mehrwertdienste (Application Services), wie z.B. "Prepaid", auch durch Teilnehmer, die sich im Versorgungsbereich von anderen Kommunikationsnetzen aufhalten, ist eine Vorraussetzung für die Attraktivität solcher Mehrwertdienste.

Die Mehrwertdienste erfordern neben einer Unterstützung der dem Mehrwertdienst zugrundeliegenden Funktionen im Heimat-Kommunikationsnetz ebenfalls eine Unterstützung durch die besuchten Kommunikationsnetze.

Einer schnellen Einführung derartiger Funktionen wie z.B. CAMEL (Customized Application for Mobil network Enhanced Logic) stehen derzeit eine umfangreiche Standardisierung und langwierige Realisierungszyklen entgegen. Die Einführung der CAMEL Phase 2 erstreckt sich beispielsweise über einen Zeitraum von mehreren Jahren, zwischen der Verabschiedung des Standards Anfang 1998 und der ersten vollständigen Einführung in Kommunikationsnetzen der Netzbetreiber.

Als Konsequenz stehen dem Netzbetreiber noch nicht die erforderlichen Funktionen entsprechen seiner Anforderungen zur Verfügung. Um diese Einschränkungen wenigstens teilweise zu umgehen, wurden in der Vergangenheit mit teilweise hohem Aufwand kundenspezifische Sonderlösungen realisiert, z.B. Pre-CAMEL Roaming in Skandinavien.

Als Alternative zu den netzbasierten Lösungen entstehen derzeit End-to-End (Client/Server) Applikationen wie MexE, SAT und WAP. Auf diesen Lösungen basierende Dienste sind für das Netz transparent und können somit nicht auf Daten (z.B. Teilnehmerdaten) und Verfahren des Netzes zurückgreifen, womit Ihre Verwendbarkeit stark eingeschränkt ist.

Der Erfindung liegt die Aufgabe zugrunde, ein Verfahren zur Steuerung von Mehrwertdiensten anzugeben, das die Einführung der Dienste beschleunigt. Diese Aufgabe wird durch das Verfahren mit den Merkmalen des Anspruchs 1 gelöst. Vorteilhafte Weiterbildungen der Erfindung sind den Unteransprüchen zu entnehmen.

Beim erfindungsgemäßen Verfahren zur Steuerung von Mehrwertdiensten für Teilnehmerstationen eines ersten Kommunikationsnetzes ist im ersten Kommunikationsnetz ein teilnehmerspezifisches Profil für die Mehrwertdienste gespeichert. Ein zweites Kommunikationsnetz bietet die Mehrwertdienste ebenfalls an, wobei das zweite Kommunikationsnetz eine Vermittlung auf der Basis des Internet-Protokolls durchführt. Das zweite Kommunikationsnetz muß für die Unterstützung der Mehrwertdienste keine Mechanismen über die Basis-Signalisierung hinaus zur Verfügung stellen.

Eine Teilnehmerstation, die sich im Versorungsbereich des zweiten Kommunikationsnetzes befindet, meldet sich bei einer Kontrollinstanz des zweiten Kommunikationsnetzes an. Im Zuge des Location-Updates fordert das erste Kommunikationsnetz das zweite Kommunikationsnetz auf, für diese Teilnehmerstation alle Signalisierungsnachrichten in das erste Kommunikationsnetz zu senden. Die Anforderung des Mehrwertdienstes erfolgt dann implizit durch eine Anforderung eines Verbindungsaufbaus und ist für das zweite Kommunikationsnetz transparent.

Von der Kontrollinstanz des zweiten Kommunikationsnetzes werden zumindest Teile von Signalisierungsmeldungen der Teilnehmerstation zum ersten Kommunikationsnetz weitergeleitet, wo eine Steuerung des Mehrwertdienstes im zweiten Kommunikationsnetz durch einen Signalisierungsmeldungsaustausch auf der Basis des teilnehmerspezifischen Profils stattfindet. Durch diese Steuerung wird im zweiten Kommunikationsnetz eine Vermittlung von Nutzinformationen im Rahmen des Mehrwertdienstes möglich.

In den klassischen Kommunikationsnetzen, deren Signalisierung auf dem Zeichengabeprotokoll SS7 basierte, bestand aus Gründen der Leistungsfähigkeit das Bestreben, die kombinierten Signalisierungs- und Transportkanäle nicht zu der Kontrollinstanz zu bringen, die den Mehrwertdienst umsetzt (Service Execution Node CSE/SCP). Stattdessen wurden sogenannte Dienst-Kontrollprotokolle wie CAP oder INAP mit den eingangs beschriebenen Einschränkungen eingeführt oder der Transportkanal wurde in die Kontrollinstanz geführt. Das erfindungsgemäße Verfahren vermeidet die Zusammenführung von Vermittlungs- und Mehrwertdienst-Steuerfunktion in einem Knoten.

Die grundlegende Idee der Erfindung ist es, die Signalisierungsmeldungen für den Mehrwertdienst im Heimat-Kommunikationsnetz (erstes Kommunikationsnetz) auswertbar zu machen, jedoch die Steuerung der Transportwege, d.h. die Vermittlung der Nutzinformationen, im versorgenden (zweiten) Kommunikationsnetz zu belassen. Signalisierung und Vermittlung werden also auch beim Roaming strikt getrennt.

Die Signalisierungsmeldungen werden direkt in das Heimatkommunikationsnetz der Teilnehmerstation geleitet, wodurch dort alle Informationen zur Steuerung einer Verbindung zur Verfügung stehen. Damit können die von der Teilnehmerstation abgehenden Signalisierungsmeldungen im Sinne von Mehrwegdiensten ohne Einschränkungen modifiziert werden.

In IP (internet protocoll) basierten Kommunikationsnetzen (beispielsweise H.323 Netze) ist es erfindungsgemäß möglich, die Signalisierungs- und Transport-Kanäle über unterschiedliche Routen (Netze) zu leiten. Das erfindungsgemäße Verfahren nimmt eine Trennung zwischen Signalisierung und Vermittlung der Nutzinformationen vor, um neue Mehrwertdienste ohne langwierige Standardisierungen einführen zu können.

Die Steuerung der Mehrwertdienste braucht nur für solche Dienste erfolgen, die durch das zweite Kommunikationsnetz nicht ausgeführt werden können, da die nötigen Informationen dort nicht zu Verfügung stehen. Daher ist es vorteilhaft, nach der Anforderung eines Dienstes durch die Teilnehmerstation dieses festzustellen und ggf. keine Signalisierung zum ersten Kommunikationsnetz einzuleiten.

Die in den Unteransprüchen genannten Protokolle sind deshalb vorteilhaft, da sie von vielen unterschiedlichen Kommunikationsnetzen unterstützt werden und deshalb eine schnelle Einführung der Mehrwertdienste ohne großen Implementierungsaufwand unterstützen. Auch die genannten Instanzen, wie Gatekeeper, Dienstkontrollinstanz, sind Einrichtungen, die in Kommunikationsnetzen durch entsprechende Anpassung leicht die Durchführung des erfindungsgemäßen Verfahrens ermöglichen.

Ausführungsbeispiele des erfindungsgemäßen Verfahrens werden nachfolgend bezugnehmend auf zeichnerische Darstellung näher erläutert.

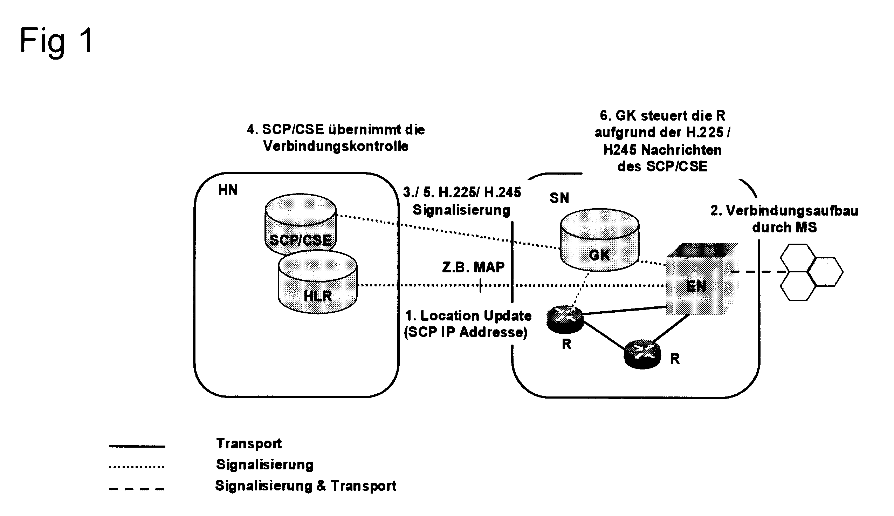

Dabei zeigt
Fig 1 die Steuerung eines Mehrwertdienstes für eine Teilnehmerstation, die sich nicht im Versorgungsbereich ihres Heimat-Kommunikationsnetzes befindet.

In Fig 1 sind zwei beispielhaft als Mobilfunknetze ausgebildetet Kommunikationsnetze SN, HN dargestellt. Eine Teilnehmerstation MS ist beim Netzbetreiber des ersten Kommunikationsnetzes HN (home network) registriert, so daß das erste Kommunikationsnetz für diese Teilnehmerstation das Heimat-Kommunikationsnetz HN ist. Das erste Kommunikationsnetz HN umfaßt eine Dienstkontrollinstanz SCP/CSE (switching control point / CAMEL Service Environment) zur Steuerung der Mehrwertdienste und ein Heimatregister HLR. Im Heimatregister HLR ist ein teilnehmerspezifisches Profil für die Teilnehmerstation MS gespeichert. Im teilnehmerspezifischen Profil sind die Mehrwertdienste angegeben, die der Teilnehmer abonniert hat und zusätzlich Parameter zu diesen Mehrwertdiensten.

Die Teilnehmerstation MS hält sich jedoch momentan im Versorgungsbereich eines zweiten Kommunikationsnetzes SN (serving network) auf. Das zweite Kommunikationsnetz SN umfaßt mehrere Vermittlungsknoten R (Router) zum Transport von IP-Pakten, einen Gatekeeper (GK) als Kontrollinstanz zur Registrierung von Teilnehmerstationen MS, zur Steuerung der Vermittlungsknoten R und zur Steuerung der Signalisierung zum ersten Kommunikationsnetz HN und einen Kontrollknoten EN (Edge Node) zum Anschluß an ein Zugangsnetz zu mobilen Teilnehmerstationen MS und zur Zugangssteuerung der Teilnehmerstationen MS.

Die Vermittlung des zweiten Kommunikationsnetzes SN ist IP-basiert. Das erste Kommunikationsnetz muß kein IP-basiertes Netz sein, jedoch muß die IP-Signalisierung verarbeitbar sein.

Aus Fig 1 ist ersichtlich, daß zwischen den Vermittlungsknoten R und dem Kontrollknoten EN Transportkanäle und vom Gatekeeper GK zu dem Kontrollknoten EN, den Vermittlungsknoten R und zum ersten Kommunikationsnetz HN Signalisierungskanäle aufgebaut werden können. Auch der Kontrollknoten EN und das erste Kommunikationsnetz HN können über Signalisierungskanäle miteinander verbunden werden. Zwischen dem Kontrollknoten EN und dem Zugangsnetz für die mobilen Teilnehmerstationen MS sind Signalisierungs- und Transportkanäle zusammengefaßt.

Ein beispielhafter Ablauf der Steuerung eines Mehrwertdienstes wird im folgenden vorgestellt:
1. Mit einer Location-Update-Prozedur nach dem Standard H.323 "gatekeeper discovery" meldet sich die Teilnehmerstation MS automatisch beim Gatekeeper GK des zweiten Kommunikationsnetzes SN an. In diesem Gatekeeper GK wird die Adresse der Dienstkontrollinstanz SCP/CSE im ersten Kommunikationsnetz HN der Teilnehmerstation MS gespeichert. Jeder anschließend durch die Teilnehmerstation MS initiierte Verbindungsaufbau, wird durch diesen Gatekeeper GK signalisiert.
2. Die Teilnehmerstation MS fordert einen Mehrwertdienst an, der z.B. mit einem Verbindungsaufbau verknüft ist.
3. Die im Falle eines Verbindungsaufbaus durch die Teilnehmerstation MS zum Gatekeeper GK gelangten Signalisierungsmeldungen werden durch diesen Gatekeeper GK zur Dienstkontrollinstanz SCP/CSE im Heimatnetz HN weitergeleitet.
4. Die Dienstkontrollinstanz SCP im Heimatnetz HN übernimmt die Kontrolle der Verbindungssteuerung gemäß der durch den Teilnehmer abonnierten und im teilnehmerspezifischen Profil gespeicherten Mehrwertdienste.
5. Der Dienstkontrollinstanz SCP SCP/CSE signalisiert dem Gatekeeper GK im besuchten Kommunikationsnetz SN mittels H.225/ H.245 Signalisierungsmeldungen wie die Verbindung weiterzubehandeln ist.
6. Der Gatekeeper GK bestimmt aufgrund der Topologie innerhalb des besuchten Kommunikationsnetzes SN und der Signalisierungsanweisungen der Dienstkontrollinstanz SCP/CSE wie die Verbindung weiter zu vermitteln ist und steuert entsprechend die Vermittlungsknoten R.

Durch das beschriebene Verfahren können Mehrwertdienste schnell und flexibel in Kommunikationsnetze eingeführt werden, da die Vermittlungs-Kontrolle direkt, d.h. nicht über einen Filter, beim Mehrwertdienst liegt und das Interworking der beiden Funktionen nicht mittels standardisierter Schnittstellen wie CAP/INAP geregelt werden muß. Die Signalisierung, welche für dieses Verfahren notwendig ist, ist ohne Mehraufwand von jedem IP-basierten Kommunikationsnetz unterstützbar.

So muß zur Unterstützung des Prepaid-Dienstes für roamende Teilnehmerstationen MS das besuchte Kommunikationsnetz SN nicht notwendigerweise den CAP Phase 2 unterstützen. Das besuchte Kommunikationsnetz SN sendet die Signalisierungsmeldungen eines Verbindungsaufbaus direkt zur Dienstkontrollinstanz SCP im Heimatnetz HN der Teilnehmerstation MS. Die Dienstkontrollinstanz SCP startet die Überwachung der Verbindung und sendet die Nachrichten zum Verbindungsaufbau direkt zum Gatekeeper GK des besuchten Kommunikationsnetzes SN zurück. Dieser Gatekeeper GK übernimmt die Vermittlung und die Ressourcensteuerung der Verbindung.

## Patentansprüche

1. Verfahren zur Steuerung von Mehrwertdiensten für Teilnehmerstationen (MS) eines ersten Kommunikationsnetzes (HN), bei dem
- im ersten Kommunikationsnetz (HN) ein teilnehmerspezifisches Profil für die Mehrwertdienste gespeichert ist,
- das zweite Kommunikationsnetz (SN) eine Vermittlung auf der Basis des Internet-Protokolls (IP) durchführt,
- eine Teilnehmerstation (MS) sich im Versorungsbereich des zweiten Kommunikationsnetzes (SN) bei einer Kontrollinstanz (GK) des zweiten Kommunikationsnetzes (SN) anmeldet,
- für die Teilnehmerstation (MS) im Versorungsbereich des zweiten Kommunikationsnetzes (SN) ein Verbindungsaufbau durchgeführt wird,
- von der Kontrollinstanz (GK) des zweiten Kommunikationsnetzes (SN) zumindest Teile von Signalisierungsmeldungen der Teilnehmerstation (MS) zum ersten Kommunikationsnetz (HN) weitergeleitet werden,
- das erste Kommunikationsnetz (HN) eine Steuerung des Mehrwertdienstes im zweiten Kommunikationsnetz (SN) durch Signalisierungsmeldungen auf der Basis des teilnehmerspezifischen Profils durchführt, und
- das zweite Kommunikationsnetz (SN) eine Vermittlung von Nutzinformationen im Rahmen des Mehrwertdienstes gesteuert durch die Signalisierung des ersten Kommunikationsnetzes (HN) durchführt.

2. Verfahren nach Anspruch 1, bei dem
die Anmeldung der Teilnehmerstation (MS) im zweiten Kommunikationsnetz (SN) nach der Standardabfrage H.323 "Gatekeeper discovery" durchgeführt wird.

3. Verfahren nach einem der vorherigen Ansprüche, bei dem
die Signalisierung zwischen dem ersten und zweiten Kommunikationsnetz (HN, SN) mittels H.225 oder H.245 Signalisierungsprotokoll erfolgt.

4. Verfahren nach einem der vorherigen Ansprüche, bei dem
das erste Kommunikationsnetz (HN) ebenfalls eine Vermittlung auf der Basis des Internet-Protokolls (IP) durchführt.

5. Verfahren nach einem der vorherigen Ansprüche, bei dem
die Steuerung des Mehrwertdienstes im ersten Kommunikationsnetz (HN) durch eine Dienstkontrollinstanz (SCP/CSE) durchgeführt wird.

6. Verfahren nach einem der vorherigen Ansprüche, bei dem
die Kontrollinstanz (GK) des zweiten Kommunikationsnetzes (SN) ein sogenannter "Gatekeeper" ist.

7. Verfahren nach Anspruch 6, bei dem
der "Gatekeeper" Vermittlung und Ressourcensteuerung für den Mehrwertdienst durchführt.

8. Verfahren nach einem der vorherigen Ansprüche, bei dem
das zweite Kommunikationsnetz (SN) ein Kernnetz eines Mobilfunknetzes ist.
